# EUROPÄISCHE PATENTSCHRIFT

(11) **EP 2 795 360 B1**
(45) Veröffentlichungstag und Bekanntmachung des Hinweises auf die Patenterteilung: **14.08.2019**
(21) Anmeldenummer: 12805960.7
(22) Anmeldetag: 28.11.2012
(51) Int. Cl.: G01S 7/03, G01S 7/02, H01Q 1/32, H01Q 17/00, B29L 31/00, B29K 507/04, B29C 45/00, G01S 13/93

(54) **RADAREINRICHTUNG FÜR EIN KRAFTFAHRZEUG, HALTER FÜR EIN RADARGERÄT UND VERFAHREN ZUM HERSTELLEN EINES ABSORPTIONSELEMENTS FÜR EIN RADARGERÄT**
RADAR DEVICE FOR A MOTOR VEHICLE, MOUNT FOR A RADAR DEVICE AND METHOD FOR MANUFACTURING AN ABSORPTION ELEMENT FOR A RADAR DEVICE
SYSTÈME DE RADAR POUR VÉHICULE, SUPPORT DE RADAR ET PROCÉDÉ DE FABRICATION D'UN ÉLÉMENT ABSORBANT POUR RADAR

(30) Priorität: 23.12.2011 DE 102011122346
(43) Veröffentlichungstag der Anmeldung: 29.10.2014
(73) Patentinhaber: Valeo Schalter und Sensoren GmbH, 74321 Bietigheim-Bissingen (DE)
(72) Erfinder: PFITZENMAIER, Patrick, 74354 Besigheim (DE); SICKINGER, Frank, 71287 Weissach (DE)
(74) Vertreter: Withopf, Kristina
(86) Internationale Anmeldenummer: PCT/EP2012/073817
(87) Internationale Veröffentlichungsnummer: WO 2013/092143

(56) Entgegenhaltungen:
- EP-A1- 1 674 882
- DE-A1- 19 707 585
- DE-A1-102004 033 760
- DE-A1-102009 042 285
- DE-A1-102010 034 073
- JP-A- 2007 057 483
- US-B2- 6 788 190
- US-B2- 7 408 500

## Beschreibung

Die Erfindung betrifft eine Radareinrichtung für ein Kraftfahrzeug, welche ein Radargerät zum Abstrahlen und Empfangen von elektromagnetischen Wellen sowie wenigstens ein Absorptionselement aufweist, welches aus einem Absorptionsmaterial gebildet ist, das die elektromagnetischen Wellen absorbiert. Die Erfindung betrifft außerdem einen Halter für ein Radargerät eines Kraftfahrzeugs, der zum Befestigen des Radargeräts an einem Fahrzeugbauteil ausgebildet ist, wie auch ein Verfahren zum Herstellen eines Absorptionselements für ein Radargerät eines Kraftfahrzeugs.

Radargeräte für Kraftfahrzeuge sind bereits Stand der Technik. Vorliegend richtet sich das Interesse vorzugsweise auf ein solches Radargerät, welches bei einer Frequenz von 24 GHz betrieben wird. Radargeräte dienen zur Detektion von fahrzeugexternen Objekten und liefern dem Fahrer unterschiedlichste Informationen über das detektierte Objekt, etwa eine Information über den Abstand, über die relative Geschwindigkeit, wie auch über den so genannten Zielwinkel, also einen Winkel zwischen einer das Objekt mit dem Radargerät verbindenden Verbindungslinie und einer Referenzlinie (zum Beispiel die Fahrzeuglängsachse). Solche Radargeräte werden üblicherweise hinter dem Stoßfänger platziert, nämlich beispielsweise mittig hinter dem hinteren Stoßfänger oder aber in den hinteren Eckbereichen des Kraftfahrzeugs. Zur Detektion des Objekts sendet das Radargerät elektromagnetische Wellen aus, die dann an dem zu detektierenden Objekt reflektieren und in Form eines Radarechos wieder zum Radargerät gelangen. Die empfangenen Wellen können dann im Hinblick auf die oben genannten Informationen ausgewertet werden.

Mit dem Radargerät wird in horizontaler Richtung ein relativ breiter Winkelbereich abgetastet, welcher sogar 150° betragen kann. Das Radargerät weist also einen relativ großen Azimutwinkel auf, sodass der Erfassungsbereich des Radargeräts in Azimutrichtung relativ breit ist. Insbesondere bei solchen Radargeräten ist problematisch, dass die abgestrahlten elektromagnetischen Wellen an metallischen - und sogar an nicht-metallischen - Gegenständen reflektiert werden. Hierbei sind besonders metallische Gegenstände bzw. Strukturen im Bereich hinter dem Radargerät problematisch. Durch die hochfrequenten Reflexionen an metallischen Strukturen des Kraftfahrzeugs kommt es zu Störungen des Radargeräts, und die Messwerte können verfälscht werden. Es ist bereits Stand der Technik, diese Störungen durch ein Absorptionselement zu minimieren, durch welches die hochfrequenten elektromagnetischen Wellen absorbiert werden. So ist beispielsweise aus dem Dokument US 7 408 500 B2 ein Radargerät bekannt, bei welchem ein derartiges Absorptionselement auf einem Substrat angebracht ist, auf welchem außerdem die Antennenstrukturen angeordnet sind. Als nachteilig an diesem Stand der Technik ist der Umstand anzusehen, dass durch die Anordnung des Absorptionselements auf dem Substrat ein zusätzlicher Bauraum im Radargerät benötigt wird und somit das Radargerät selbst nicht mehr kompakt aufgebaut werden kann. Außerdem ist ein nachträgliches Aufrüsten von bereits vorhandenen Radargeräten mit einem solchen Absorptionselement nicht oder nur mit einem relativ großen Aufwand möglich. So müssten bereits vorhandene Radargeräte in aufwendiger Weise umgestaltet werden, und bei bereits vorhandenen Radargeräten müsste das Absorptionselement auf die Platine aufgebracht werden.

Eine gattungsgemäße Radareinrichtung ist außerdem aus dem Dokument US 6 788 190 B2 als bekannt zu entnehmen. Hier ist das Absorptionselement ebenfalls in einem Gehäuse des Radargeräts angeordnet, und durch das Absorptionselement ist ein Empfänger des Radargeräts in Richtung seitlich nach außen hin abgeschirmt. Auch im Gegenstand gemäß Dokument US 6 788 190 B2 muss das Radargerät selbst entsprechend größer aufgebaut werden, und ein nachträgliches Aufrüsten mit einem Absorptionselement ist nur mit einem relativ großen Aufwand möglich.

JP 2007 057483 A beschreibt eine Millimeterwellen-Radarvorrichtung, die eine Antenne zum Senden und Empfangen von elektrischen Wellen aufweist, ein Radom zum Abdecken der Antenne, und einen elektrischen Wellenabsorbierer, der auf der Oberfläche des Radoms angeordnet ist.

EP 1 674 882 A1 offenbart eine Radarvorrichtung, in der ein Oberfläche eines Rahmenkörpers, der um eine Sendeantenne und eine Empfangsantenne herum vorgesehen ist, derart geformt ist, dass eine von einem Ziel reflektierte Welle nicht in eine Richtung zurückgegeben werden darf, in welche eine Sendewelle von der Sendeantenne gesendet wird. Die Radarvorrichtung kann einen elektrischen Wellenabsorbierer auf einem Teil der Oberfläche des Rahmenkörpers umfassen.

Es ist Aufgabe der Erfindung, eine Lösung aufzuzeigen, wie bei einer Radareinrichtung der eingangs genannten Gattung das Radargerät selbst besonders kompakt aufgebaut werden kann und gleichzeitig auch die ordnungsgemäße Funktionsweise des Radargeräts mithilfe des Absorptionselements gewährleistet werden kann.

Diese Aufgabe wird erfindungsgemäß durch eine Radareinrichtung, einen Halter, wie auch durch ein Verfahren mit den Merkmalen gemäß den jeweiligen unabhängigen Patentansprüchen gelöst. Vorteilhafte Ausführungen der Erfindung sind Gegenstand der abhängigen Patentansprüche, der Beschreibung und der Figuren.

Eine erfindungsgemäße Radareinrichtung für ein Kraftfahrzeug beinhaltet ein Radargerät, welches zum Abstrahlen und Empfangen von elektromagnetischen Wellen ausgebildet ist, wie auch wenigstens ein Absorptionselement, welches aus einem Absorptionsmaterial (radar absorptive material, RAM) gebildet ist, welches die elektromagnetischen Wellen absorbiert. Erfindungsgemäß ist vorgesehen, dass das wenigstens eine Absorptionselement als ein von einem Gehäuse des Radargeräts separates Element ausgebildet ist und außerhalb des Gehäuses angeordnet ist, nämlich an dem Gehäuse.

Es wird also der Weg gegangen, das Absorptionselement als separates Bauteil auszugestalten, welches außerhalb des Radargehäuses - in welchem zum Beispiel der Sender und Empfänger angeordnet sind - angeordnet ist. Das Radargerät selbst kann somit besonders kompakt aufgebaut werden, weil keine Absorptionselemente in das Gehäuse eingesetzt werden müssen. Außerdem können bereits vorhandene Radargeräte mit einem Absorptionselement nachträglich aufgerüstet werden; dazu kann lediglich ein solches Absorptionselement bereitgestellt und an dem Gehäuse angeordnet werden. Auf der anderen Seite steht auch im Gehäuse des Radargeräts mehr Bauraum für andere elektronische Komponenten des Radargeräts zur Verfügung.

Erfindungsgemäß schließt das bogenförmige Absorptionselement mit der Stirnseite des Gehäuses bündig ab. Einerseits können somit die unerwünschten Wellen absorbiert werden; andererseits wird somit der ordnungsgemäße Betrieb des Radargeräts nicht beeinträchtigt, und der Erfassungswinkel des Radargeräts bleibt unverändert.
Es erweist sich als vorteilhaft, wenn das wenigstens eine Absorptionselement als ein Halter ausgebildet ist, mittels welchem das Radargerät an einem Fahrzeugbauteil befestigbar ist. Somit übernimmt das Absorptionselement zwei unterschiedliche Funktionen: einerseits die Funktion des Absorbierens der elektromagnetischen Wellen und andererseits auch die Funktion der Halterung des Radargeräts. Somit können Bauteile eingespart werden, wie auch der wertvolle Bauraum.

Besonders bevorzugt ist das wenigstens eine Absorptionselement um das Gehäuse des Radargeräts herum angeordnet, sodass das Absorptionselement das Gehäuse des Radargeräts außenumfänglich umgibt. Insbesondere liegt das Absorptionselement bei dieser Ausführungsform an allen Seitenwänden des Gehäuses an, sodass die Seitenwände des Gehäuses durch das Absorptionselement ummantelt sind. Dies kann so aussehen, dass ausschließlich eine Stirnseite, über welche die elektromagnetischen Wellen abgestrahlt und empfangen werden, und gegebenenfalls auch eine der Stirnseite gegenüberliegende Rückseite des Radargeräts frei von dem Absorptionselement ist/sind, sodass sich die elektromagnetischen Wellen ungehindert durch die Stirnseite des Gehäuses hindurch ausbreiten können. Die Anordnung des Absorptionselements um das Gehäuse herum hat den Vorteil, dass jegliche, seitlich neben dem Radargerät - etwa an der Fahrzeugkarosserie - reflektierten Wellen durch das Absorptionselement absorbiert werden und somit die Messung mit dem Radargerät nicht beeinflussen können. Außerdem kann somit - insbesondere wenn das Absorptionselement als Halter ausgeführt ist - ein besonders sicherer Sitz des Radargeräts und somit eine besonders stabile Anordnung des Radargeräts gewährleistet werden.

In einer Ausführungsform ist das Gehäuse des Radargeräts in das Absorptionselement eingesteckt. Hierzu kann beispielsweise eine Rasteinrichtung vorgesehen sein, mittels welcher das Gehäuse des Radargeräts mit dem Absorptionselement verbunden wird. Eine derartige Rasteinrichtung kann zumindest ein federndes Rastelement einerseits und eine korrespondierende Rastöffnung andererseits aufweisen. Somit kann das Radargerät auch ohne viel Aufwand mit dem Absorptionselement verbunden werden, und zwar mit lediglich einer Hand. Außerdem kann somit die Verbindung zwischen dem Absorptionselement und dem Gehäuse wieder gelöst werden, nämlich beispielsweise dann, wenn das Radargerät aus dem Kraftfahrzeug wieder entnommen und zum Beispiel untersucht werden muss. Zur Aufnahme des Gehäuses des Radargeräts weist das Absorptionselement bevorzugt eine Aufnahme auf, in welche das Gehäuse aufgenommen und dort eingerastet werden kann.

Das wenigstens eine Absorptionselement kann auch plattenförmig ausgeführt sein und sich parallel zu der Stirnseite des Gehäuses erstrecken, über welche die elektromagnetischen Wellen abgestrahlt und empfangen werden. Das Absorptionselement kann hier also ein plattenförmiges Element aufweisen, das sich parallel zur Stirnseite des Gehäuses erstreckt. Dieses plattenförmige Element kann auch eine durchgängige Aussparung aufweisen, in welche das Gehäuse aufgenommen werden kann. An das plattenförmige Element, welches sich quasi in Form eines Flügels parallel zur Stirnseite des Gehäuses erstreckt, können sich senkrechte Wandelemente anschließen, welche die Aussparung umranden und mit denen das Gehäuse des Radargeräts umgeben ist. Das plattenförmige Element erstreckt sich somit parallel zur Stirnseite - und insbesondere auch in der Ebene der Stirnseite des Gehäuses -, während die senkrecht von diesem plattenförmigen abstehenden Wandelemente des Absorptionselements an den Seitenwänden des Gehäuses anliegen können und somit das Gehäuse außenumfänglich ummanteln können. Somit ist das Radargerät besonders zuverlässig und wirkungsvoll gegen an Karosserieteilen reflektierte Wellen geschützt bzw. abgeschirmt.

Alternativ kann das wenigstens eine Absorptionselement im Querschnitt bogenförmig ausgebildet sein und zwei seitliche Flügel aufweisen, die sich von dem Gehäuse in entgegengesetzte Richtungen nach außen hin erstrecken und in einer der Abstrahlrichtung des Radargeräts entgegengesetzten Richtung gekrümmt ausgebildet sind. Somit ist das Absorptionselement bauchartig ausgeführt, so dass die seitliche Abschirmung des Radargeräts besonders wirkungsvoll und zuverlässig ist. Die seitlichen Flügel schützen nämliche die Seitenwände des Radargeräts von einer unerwünschten Strahlung und gewährleisten die ordnungsgemäße Funktionsweise des Radargeräts.

Dabei ist es bevorzugt, wenn in der der Abstrahlrichtung entgegengesetzten Richtung - also nach hinten hin - die Flügel über das Gehäuse des Radargeräts hinaus stehen bzw. sich über eine Hinterseite des Gehäuses erstrecken. Dies bedeutet, dass die Flügel das Gehäuse des Radargeräts überragen. Somit ist das Radargerät vor unerwünschten Reflektionen besonders gut geschützt.

In einer Ausführungsform ist vorgesehen, dass das Absorptionselement eine wellenabsorbierende Platte umfasst oder aber durch diese gebildet ist, welche an einer der Stirnseite gegenüberliegenden Rückseite des Gehäuses des Radargeräts angebracht ist. Mit dieser Platte kann die Rückseite des Gehäuses auch vollständig abgedeckt werden. Dies hat den Vorteil, dass auch diejenigen Wellen absorbiert werden können, die an den Karosserieteilen des Kraftfahrzeugs hinter dem Radargerät reflektiert werden.

Es erweist sich als besonders vorteilhaft, wenn das Absorptionselement als Gussbauteil ausgebildet ist. Somit ist die Herstellung des Absorptionselements ohne viel Aufwand möglich, und das Absorptionselement kann unterschiedlichste Formgebungen aufweisen und somit an die Formgebung des Gehäuses des Radargeräts entsprechend angepasst werden.

Das Absorptionsmaterial (RAM) kann ein wellenabsorbierender Kunststoff sein. Somit wird das Spritzgießen des Absorptionselements ermöglicht.

Die Erfindung betrifft auch einen Halter für ein Radargerät eines Kraftfahrzeugs, welcher zum Befestigen des Radargeräts an einem Fahrzeugbauteil ausgebildet ist. Der Halter ist zumindest bereichsweise aus einem Absorptionsmaterial gebildet, welches elektromagnetische Wellen absorbiert. Der Halter bildet ein Absorptionselement, das als ein von einem Gehäuse des Radargeräts separates Element ausgebildet ist und außerhalb des Gehäuses und an dem Gehäuse angeordnet werden kann. Das wenigstens eine Absorptionselement ist im Querschnitt bogenförmig ausgebildet und weist zwei Flügel auf, die sich von dem Gehäuse in entgegengesetzte Richtungen nach außen hin erstrecken und in einer Richtung entgegen einer Abstrahlrichtung des Radargeräts gekrümmt ausgebildet sind. Das wenigstens eine Absorptionselement schließt mit einer Stirnseite des Gehäuses bündig ab, über welche die elektromagnetischen Wellen abstrahlbar sind.

Ein erfindungsgemäßes Verfahren dient zum Herstellen eines Absorptionselements für ein Radargerät eines Kraftfahrzeugs, wobei durch das Absorptionselement elektromagnetische Wellen absorbiert werden. Das Absorptionselement wird durch Spritzgießen hergestellt. Das Absorptionselement ist im Querschnitt bogenförmig ausgebildet und weist zwei Flügel auf, die sich bei außerhalb eines Gehäuses des Radargeräts und an dem Gehäuse angeordneten Absorptionselement von dem Gehäuse in entgegengesetzte Richtungen nach außen hin erstrecken und in einer Richtung entgegen einer Abstrahlrichtung des Radargeräts gekrümmt ausgebildet sind. Das wenigstens eine Absorptionselement schließt mit einer Stirnseite des Gehäuses bündig ab, über welche die elektromagnetischen Wellen abstrahlbar sind.

Somit ist es möglich, das Absorptionselement ohne viel Aufwand herzustellen und außerdem mit unterschiedlichsten Formgebungen auszugestalten und an die geometrische Form des Gehäuses des Radargeräts entsprechend anzupassen.

Das Verfahren beinhaltet bevorzugt folgende Schritte:
a) Bereitstellen eines Kunststoffmaterials für das Spritzgießen,
b) Beimischen eines wellenabsorbierenden Materials zu dem Kunststoffmaterial, sodass ein Mischmaterial bereitgestellt wird, und
c) Herstellen des Absorptionselements durch Spritzgießen aus dem Mischmaterial.

Durch das Vermischen des Kunststoffmaterials mit dem wellenabsorbierenden Material wird erreicht, dass einerseits das Absorptionselement durch Spritzgießen hergestellt werden kann und andererseits auch die Eigenschaft aufweist, die elektromagnetischen Wellen zu absorbieren.

Um die Wellen wirkungsvoll zu absorbieren, kann vorgesehen sein, dass im Schritt b) dem Kunststoffmaterial Graphit als wellenabsorbierendes Material beigemischt wird.

Die Erfindung betrifft auch ein Kraftfahrzeug mit einer erfindungsgemäßen Radareinrichtung.

Die mit Bezug auf die erfindungsgemäße Radareinrichtung vorgestellten bevorzugten Ausführungsformen und deren Vorteile gelten entsprechend für den erfindungsgemäßen Halter sowie für das erfindungsgemäße Verfahren und für das Kraftfahrzeug und umgekehrt.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar.

Die Erfindung wird nun anhand eines bevorzugten Ausführungsbeispiels, wie auch unter Bezugnahme auf die beigefügten Zeichnungen näher erläutert.

Es zeigen:
- Fig. 1: in schematischer Darstellung einen Querschnitt durch eine Radareinrichtung gemäß einer Ausführungsform der Erfindung;
- Fig. 2: in schematischer und perspektivischer Darstellung ein Absorptionselement der Radareinrichtung gemäß Fig. 1;
- Fig. 3: in schematischer und perspektivischer Darstellung die Radareinrichtung gemäß Fig. 1;
- Fig. 4: in schematischer Darstellung einen Querschnitt durch eine Radareinrichtung gemäß einer weiteren Ausführungsform der Erfindung; und
- Fig. 5: in schematischer Darstellung einen Querschnitt durch eine Radareinrichtung gemäß einer weiteren Ausführungsform der Erfindung.

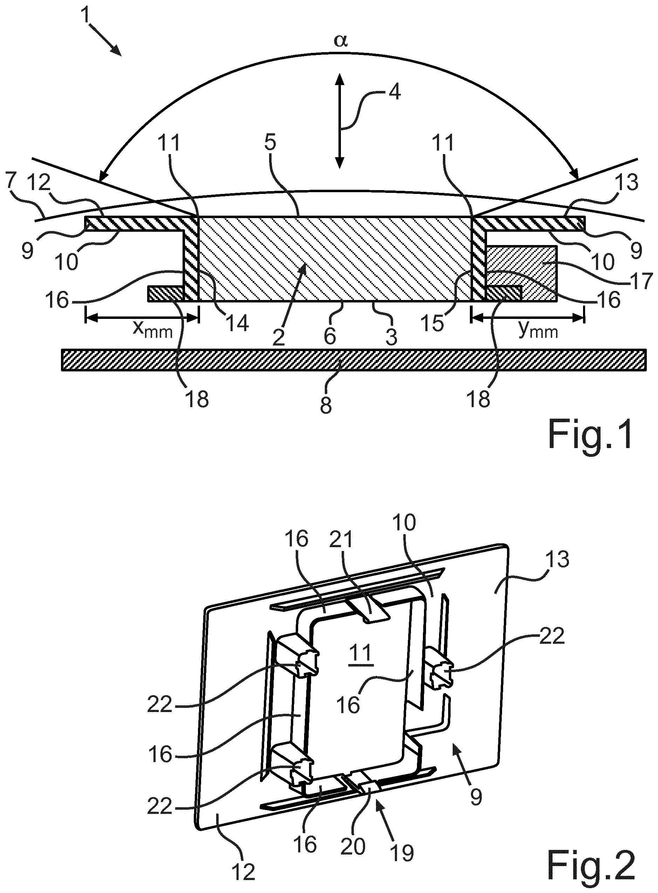

Eine in Fig. 1 dargestellte Radareinrichtung 1 für ein Kraftfahrzeug dient zum Detektieren von fahrzeugexternen Objekten, die sich in der Umgebung des Kraftfahrzeugs befinden. Die Radareinrichtung 1 dient zum Beispiel zur Bestimmung eines Abstands zwischen dem Objekt und dem Kraftfahrzeug, einer relativen Geschwindigkeit zwischen dem Kraftfahrzeug und dem Objekt sowie eines Zielwinkels, also der relativen Position des Objekts bezüglich des Kraftfahrzeugs. Die Radareinrichtung 1 weist ein Radargerät 2 auf, welches ein Gehäuse 3 aufweist, in welchem die wesentlichen Komponenten des Radargeräts 2 untergebracht sind, also insbesondere der Sender und Empfänger. Das Radargerät 2 ist zum Abstrahlen und Empfangen von elektromagnetischen Wellen 4 ausgebildet, wie dies in Fig. 1 schematisch mit einer Pfeildarstellung angedeutet ist. Das Radargerät 2 wird dabei vorzugsweise bei einer Frequenz von 24 GHz betrieben; dies bedeutet, dass die Wellen 4 mit einer Frequenz von 24 GHz erzeugt werden. Dabei handelt es sich bei der genannten Frequenz um die Mittelfrequenz, selbstverständlich kann das Frequenzspektrum der Wellen 4 auch eine bestimmte Bandbreite besitzen, nämlich beispielsweise 100 MHz oder 200 MHz oder dergleichen.

Das Radargerät 2 weist eine Stirnseite 5 auf, durch welche die elektromagnetischen Wellen 4 empfangen und abgestrahlt werden. Dabei besitzt das Radargerät 2 einen relativ breiten Erfassungswinkel a, welcher beispielsweise in einem Wertebereich von 100° bis 180° liegen kann. Der Winkel α beträgt beispielsweise 150°. Die Erfindung ist jedoch nicht auf einen bestimmten Winkel α beschränkt.

Der Erfassungswinkel α bemisst sich dabei in horizontaler Richtung und stellt somit den Azimutwinkel des Radargeräts 2 dar. Dies bedeutet, dass der Erfassungsbereich des Radargeräts 2 bzw. die Umgebung des Kraftfahrzeugs in horizontaler Richtung innerhalb des Erfassungswinkels α abgetastet wird.

Das Radargerät 2 - und genauer gesagt das Gehäuse 3 - weist eine gegenüber der Stirnseite 5 liegende Rückseite 6 auf, welche dem Innenraum des Kraftfahrzeugs zugewandt ist. Dabei wird das Radargerät 2 hinter einem Stoßfänger 7 platziert, und zwar insbesondere einem hinteren Stoßfänger 7 des Kraftfahrzeugs. Das Radargerät 2 kann zum Beispiel mittig, also in der Mitte des Stoßfängers 7, oder aber in einem Eckbereich des Stoßfängers 7 angeordnet sein. Die Rückseite 6 ist einem Karosseriebauteil 8 zugewandt, welches aus einem metallischen Material ausgebildet ist und sich hinter dem Radargerät 2 befindet.

Die Radareinrichtung 1 weist außerdem ein Absorptionselement 9 auf, welches zum Absorbieren der elektromagnetischen Wellen 4 im Bereich der Frequenz von 24 GHz ausgebildet ist. Das Absorptionselement 9 ist aus einem wellenabsorbierenden Material (RAM) gebildet. Es ist ein Gussbauteil, welches durch Spritzgießen hergestellt wird. Dabei wird ein Kunststoffmaterial mit einem wellenabsorbierenden Material - etwa Graphit - vermischt, und aus dieser Mischung wird dann das Absorptionselement 9 durch Spritzgießen hergestellt.

Wie aus dem Querschnitt gemäß Fig. 1 hervorgeht, weist das Absorptionselement 9 ein plattenartiges bzw. plattenförmiges Element 10 auf, das sich in der Ebene der Stirnseite 5 erstreckt und mit der Stirnseite 5 bündig abschließt. In dem plattenförmigen Element 10 ist eine durchgängige Aussparung 11 für das Gehäuse 3 des Radargeräts 2 ausgebildet, in welcher das Radargerät 2 aufgenommen ist. Die Aussparung 11 stellt also eine Aufnahme für das Radargerät 2 dar, in welche das Radargerät 2 eingesteckt werden kann. Dabei ist die Stirnseite 5 des Gehäuses 3 bündig zu der Oberfläche des Elements 10 angeordnet. Durch diese Aussparung 11 sind somit zwei seitliche Flügel 12, 13 gebildet bzw. das Element 10 ist in zwei Flügel 12, 13 unterteilt. Der erste Flügel 12 schließt sich dabei an eine Seitenwand 14 des Gehäuses 3 an, während sich der zweite Flügel 13 an eine gegenüberliegende Seitenwand 15 des Gehäuses 3 anschließt.

Die Aussparung 11 bzw. die Aufnahme für das Radargerät 2 ist seitlich begrenzt durch Wandelemente 16 des Absorptionselements 9. Die Wandelemente 16 erstrecken sich senkrecht zum plattenförmigen Element 10 und liegen an den Seitenwänden 14, 15 des Gehäuses 3 an. Mit den Wandelementen 16 ist das Gehäuse 3 des Radargeräts 2 somit außenumfänglich umgeben bzw. ummantelt, sodass lediglich die Stirnseite 5 und die Rückseite 6 frei vom wellenabsorbierenden Absorptionselement 9 sind.

Das Gehäuse 3 weist auch einen elektrischen Anschluss 17 auf, über welchen das Radargerät 2 an ein Steuergerät des Kraftfahrzeugs angeschlossen werden kann.

Außerdem sind am Gehäuse 3 Befestigungselemente 18 angebracht, welche zum Befestigen des Radargeräts 2 an einem Fahrzeugbauteil dienen. Hier können nun zwei unterschiedliche Ausführungsformen vorgesehen sein: Zum einen kann das Radargerät 2 über das Gehäuse 3 bzw. mittels der Befestigungselemente 18 an dem Fahrzeugbauteil befestigt werden, und das einstückig ausgebildete Absorptionselement 9 kann dann auf das Gehäuse 3 aufgesteckt werden. Alternativ kann das Absorptionselement 9 jedoch als ein Halter dienen, mittels welchem das Radargerät 2 an dem Fahrzeugbauteil befestigt wird. Dabei kann das Absorptionselement 9 zunächst an dem Fahrzeugbauteil platziert und mit diesem verbunden werden; und anschließend kann das Radargerät 2 in das Absorptionselement 9 eingesteckt werden. Die Halterung des Radargeräts 2 erfolgt hier ausschließlich mithilfe des Absorptionselements 9.

Also kann das Absorptionselement 9 ein Halter für das Radargerät 2 sein, sodass das Absorptionselement 9 zum Befestigen des Radargeräts 2 an einem Fahrzeugbauteil ausgebildet ist.

Die Länge der beiden Flügel 12, 13 kann gleich oder unterschiedlich sein. Wie aus Fig. 1 hervorgeht, kann die Länge des ersten Flügels 12 in Azimutrichtung x mm betragen, während die Länge des zweiten Flügels 13 in Azimutrichtung y mm betragen kann. Die beiden Zahlen x und y können aber auch gleich sein.

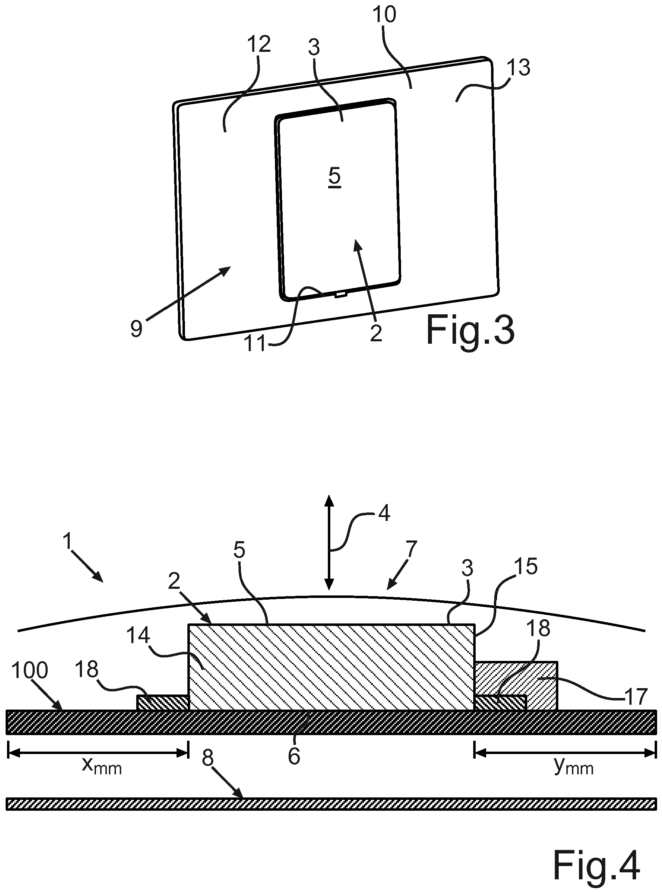

In den Fig. 2 und 3 ist das Absorptionselement 9 in perspektivischer Darstellung gezeigt. Während in Fig. 2 die Rückseite des Absorptionselements 9 gezeigt ist, zeigt Fig. 3 die Stirnseite 5 des Radargeräts 2 und die Stirnseite des Absorptionselements 9. Wie aus den Fig. 2 und 3 hervorgeht, ist das Element 10 in Form einer rechteckförmigen Platte ausgeführt, in welcher die Aussparung 11 (ebenfalls rechteckförmig) ausgebildet ist. In die Aussparung 11, welche eine Aufnahme für das Radargerät 2 bildet, kann das Radargerät 2 eingesteckt werden bzw. das Absorptionselement 9 kann auf das Radargerät 2 aufgesteckt werden. Zur Befestigung bzw. zur Verbindung des Gehäuses 3 mit dem Absorptionselement 9 ist eine Rasteinrichtung 19 vorgesehen, welche im Ausführungsbeispiel zwei Rastnasen 20, 21 einerseits und korrespondierende Rastöffnungen andererseits aufweist. Die Rastnasen 21, 20 sind hier an der Rückseite des Absorptionselements 9 vorgesehen, und die korrespondierenden Rastöffnungen (nicht dargestellt) sind an dem Gehäuse 3 ausgebildet. Wie aus Fig. 2 weiterhin hervorgeht, stehen von dem Element 10 die Wandelemente 16 senkrecht ab. Dabei sind insgesamt Wandelemente 16 auf allen vier Seiten des Gehäuses 3 vorgesehen, die insgesamt eine Fassung für das Radargerät 2 bilden, mit welcher das Gehäuse 3 ummantelt ist. Die Rastelemente 20, 21 sind dabei in diese Fassung integriert.

Für die Befestigung des Absorptionselements 9 an dem Fahrzeugbauteil können Durchgangsöffnungen 22 bereitgestellt sein.

Wie insbesondere aus Fig. 3 hervorgeht, schließt die Stirnseite 5 des Gehäuses 3 mit der Oberfläche bzw. Stirnseite des Absorptionselements 9 bündig ab. Das Absorptionselement 9 liegt somit außenumfänglich um das Gehäuse 3 herum und umgibt die Seitenwände 14, 15 des Gehäuses 3. Die beiden Flügel 12, 13 erstrecken sich seitlich nach außen, nämlich in Azimutrichtung des Radargeräts 2. Mit anderen Worten stehen die beiden Flügel 12, 13 in Richtung nach außen ab.

In Fig. 4 ist die Radareinrichtung 1 gemäß einer weiteren Ausführungsform dargestellt. Der einzige Unterschied besteht darin, dass das Absorptionselement 100 durch eine Platte gebildet ist, welche aus dem wellenabsorbierenden Material gebildet ist. Dieses Absorptionselement 100 ist an der Rückseite 6 des Gehäuses 3 angebracht und liegt somit an der Rückseite 6 an. Dabei ist das Absorptionselement 100 länger als das Gehäuse 3 und erstreckt sich in Azimutrichtung sowohl auf der linken als auch auf der rechten Seite über das Gehäuse 3 hinaus, nämlich um x mm einerseits und y mm andererseits. Somit ist das Radargerät 2 auch gegen Wellen abgeschirmt, die hinter dem Radargerät 2 reflektiert werden, etwa an dem Karosseriebauteil 8.

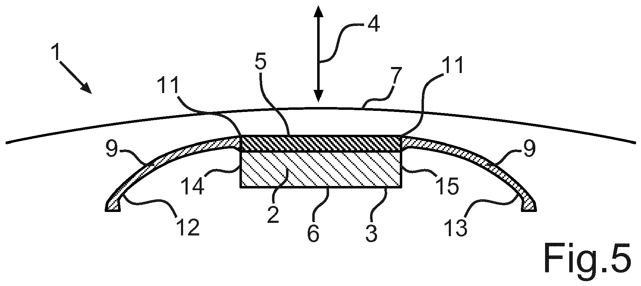

Selbstverständlich kann die Ausführungsform gemäß Fig. 4 mit der gemäß Fig. 1 bzw. Fig. 5 kombiniert werden, und die Radareinrichtung 1 kann beide Absorptionselemente 9, 100 aufweisen. Es kann aber auch lediglich eines der beiden Absorptionselemente 9, 100 eingesetzt werden.

Eine weitere Ausführungsform ist in Fig. 5 dargestellt. Dabei veranschaulicht Fig. 5 einen Querschnitt durch die Radareinrichtung 1, welche im Wesentlichen der Radareinrichtung gemäß den Fig. 1 bis 3 entspricht, jedoch mit dem Unterschied, dass das Absorptionselement 9 bogenartig bzw. bauchförmig ausgeführt ist. Das Absorptionselement weist hier eine Krümmung auf, so dass die beiden, in entgegengesetzte Richtungen nach außen hin abstehenden Flügel 12, 13 nach hinten gekrümmt sind, nämlich in eine der Abstrahlrichtung 4 des Radargeräts 2 entgegengesetzten Richtung (in Richtung zum Innenraum des Kraftfahrzeugs hin). Dabei überragen die Flügel 12, 13 auch das Gehäuse 3 bzw. erstrecken sich in der der Abstrahlrichtung entgegengesetzten Richtung noch weiter über das Gehäuse 3 hinaus. Somit ist eine bogenförmige seitliche Abschirmung geschaffen, durch welche das Radargerät 2 besonders zuverlässig von seitlichen Reflektionen geschützt werden kann. Der Übersicht halber sind in Fig. 5 die Wandelemente 16 nicht gezeigt; diese können aber auch bei der Ausführungsform gemäß Fig. 5 vorgesehen sein, so dass die Anordnung des Gehäuses 3 an dem Absorptionselement 9 gleich wie bei der Ausführungsform gemäß Fig. 1 ist.

## Patentansprüche

1. Radareinrichtung (1) für ein Kraftfahrzeug, mit einem Radargerät (2) zum Abstrahlen und zum Empfangen von elektromagnetischen Wellen (4) und mit wenigstens einem Absorptionselement (9, 100), welches aus einem Absorptionsmaterial gebildet ist, das die elektromagnetischen Wellen (4) absorbiert, wobei das wenigstens eine Absorptionselement (9, 100) als ein von einem Gehäuse (3) des Radargeräts (2) separates Element ausgebildet ist und außerhalb des Gehäuses (3) und an dem Gehäuse (3) angeordnet ist, wobei das wenigstens eine Absorptionselement (9) im Querschnitt bogenförmig ausgebildet ist und zwei Flügel (12, 13) aufweist, die sich von dem Gehäuse (3) in entgegengesetzte Richtungen nach außen hin erstrecken und in einer Richtung entgegen einer Abstrahlrichtung (4) des Radargeräts (2) gekrümmt ausgebildet sind, **dadurch gekennzeichnet, dass** das wenigstens eine Absorptionselement (9) mit einer Stirnseite (5) des Gehäuses (3) bündig abschließt, über welche die elektromagnetischen Wellen (4) abstrahlbar sind.

2. Radareinrichtung (1) nach Anspruch 1,
**dadurch gekennzeichnet, dass**
das wenigstens eine Absorptionselement (9, 100) als ein Halter ausgebildet ist, mittels welchem das Radargerät (2) an einem Fahrzeugbauteil befestigbar ist.

3. Radareinrichtung (1) nach Anspruch 1 oder 2,
**dadurch gekennzeichnet, dass**
das wenigstens eine Absorptionselement (9) um das Gehäuse (3) des Radargeräts (2) herum angeordnet ist, so dass das Absorptionselement (9) das Gehäuse (3) außenumfänglich umgibt.

4. Radareinrichtung (1) nach einem der vorhergehenden Ansprüche,
**dadurch gekennzeichnet, dass**
das Gehäuse (3) in das Absorptionselement (9) eingesteckt ist.

5. Radareinrichtung (1) nach Anspruch 1,
**dadurch gekennzeichnet, dass**
in der der Abstrahlrichtung (4) entgegengesetzten Richtung die Flügel (12, 13) über das Gehäuse (3) des Radargeräts (2) hinaus stehen.

6. Radareinrichtung (1) nach einem der vorhergehenden Ansprüche,
**dadurch gekennzeichnet, dass**
das wenigstens eine Absorptionselement (9, 100) als Gussbauteil ausgebildet ist.

7. Radareinrichtung (1) nach einem der vorhergehenden Ansprüche,
**dadurch gekennzeichnet, dass**
das Absorptionsmaterial ein wellenabsorbierender Kunststoff ist.

8. Halter (9, 100) für ein Radargerät (2) eines Kraftfahrzeugs, wobei der Halter zum Befestigen des Radargeräts (2) an einem Fahrzeugbauteil ausgebildet ist,
wobei der Halter (9, 100) zumindest bereichsweise aus einem Absorptionsmaterial gebildet ist, welches elektromagnetische Wellen (4) absorbiert, wobei der Halter ein Absorptionselement (9, 100) bildet, das als ein von einem Gehäuse (3) des Radargeräts (2) separates Element ausgebildet ist und außerhalb des Gehäuses (3) und an dem Gehäuse (3) angeordnet werden kann, wobei das wenigstens eine Absorptionselement (9) im Querschnitt bogenförmig ausgebildet ist und zwei Flügel (12, 13) aufweist, die sich von dem Gehäuse (3) in entgegengesetzte Richtungen nach außen hin erstrecken und in einer Richtung entgegen einer Abstrahlrichtung (4) des Radargeräts (2) gekrümmt ausgebildet sind, **dadurch gekennzeichnet, dass** das wenigstens eine Absorptionselement (9) mit einer Stirnseite (5) des Gehäuses (3) bündig abschließt, über welche die elektromagnetischen Wellen (4) abstrahlbar sind.

9. Verfahren zum Herstellen eines Absorptionselements (9, 100) für ein Radargerät (2) eines Kraftfahrzeugs, wobei durch das Absorptionselement (9, 100) elektromagnetische Wellen (4) absorbiert werden, wobei das Absorptionselement (9, 100) durch Spritzgießen hergestellt wird, wobei das Absorptionselement (9) im Querschnitt bogenförmig ausgebildet ist und zwei Flügel (12, 13) aufweist, die sich bei außerhalb eines Gehäuses (3) des Radargeräts (2) und an dem Gehäuse (3) angeordneten Absorptionselement (9) von dem Gehäuse (3) in entgegengesetzte Richtungen nach außen hin erstrecken und in einer Richtung entgegen einer Abstrahlrichtung (4) des Radargeräts (2) gekrümmt ausgebildet sind, **dadurch gekennzeichnet, dass** das wenigstens eine Absorptionselement (9) mit einer Stirnseite (5) des Gehäuses (3) bündig abschließt, über welche die elektromagnetischen Wellen (4) abstrahlbar sind.

10. Verfahren nach Anspruch 9,
**dadurch gekennzeichnet, dass**
das Absorptionselement (9, 100) als Halter zum Befestigen des Radargeräts (2) an einem Fahrzeugbauteil hergestellt wird.

11. Verfahren nach Anspruch 9 oder 10,
**gekennzeichnet durch**
- Bereitstellen eines Kunststoffmaterials für das Spritzgießen,
- Beimischen eines wellenabsorbierenden Materials zu dem Kunststoffmaterial, so dass ein Mischmaterial bereitgestellt wird, und
- Herstellen des Absorptionselements (9, 100) durch Spritzgießen aus dem Mischmaterial.

12. Verfahren nach einem der Ansprüche 9 bis 11,
**dadurch gekennzeichnet, dass**
dem Kunststoffmaterial Graphit als wellenabsorbierendes Material beigemischt wird.

## Claims

1. Radar device (1) for a motor vehicle, having a radar apparatus (2) for emitting and receiving electromagnetic waves (4) and having at least one absorption element (9, 100), which is formed from an absorption material which absorbs the electromagnetic waves (4), wherein the at least one absorption element (9, 100) is embodied as an element which is separate from a housing (3) of the radar apparatus (2) and is arranged outside the housing (3) and on the housing (3), wherein the at least one absorption element (9) is embodied in an arcuate shape in cross section and has two wings (12, 13) which extend outwards from the housing (3) in opposite directions and are embodied in a curved fashion in a direction counter to an emission direction (4) of the radar apparatus (2), **characterized in that** the at least one absorption element (9) terminates flush with a front side (5) of the housing (3), via which front side (5) the electromagnetic waves (4) can be emitted.

2. Radar device (1) according to Claim 1,
**characterized in that**
the at least one absorption element (9) is embodied as a securing device by means of which the radar apparatus (2) can be attached to a vehicle component.

3. Radar device (1) according to Claim 1 or 2,
**characterized in that**
the at least one absorption element (9) is arranged around the housing (3) of the radar apparatus (2), with the result that the absorption element (9) surrounds the housing (3) on the outer circumference.

4. Radar device (1) according to one of the preceding claims,
**characterized in that**
the housing (3) is plugged into the absorption element (9).

5. Radar device (1) according to Claim 1,
**characterized in that**
in the direction opposite the emission direction (4), the wings (12, 13) protrude beyond the housing (3) of the radar apparatus (2).

6. Radar device (1) according to one of the preceding claims,
**characterized in that**
the at least one absorption element (9, 100) is embodied as a cast component.

7. Radar device (1) according to one of the preceding claims,
**characterized in that**
the absorption material is a wave-absorbing plastic.

8. Securing device (9, 100) for a radar apparatus (2) of a motor vehicle, wherein the securing device is designed to attach the radar apparatus (2) to a vehicle component, wherein the securing device (9, 100) is formed at least in certain areas from an absorption material which absorbs electromagnetic waves (4), wherein the securing device forms an absorption element (9, 100) which is embodied as an element which is separate from a housing (3) of the radar apparatus (2) and can be arranged outside the housing (3) and on the housing (3), wherein the at least one absorption element (9) is embodied in an arcuate shape in cross section and has two wings (12, 13) which extend outwards from the housing (3) in opposite directions and are embodied in a curved fashion in a direction counter to an emission direction (4) of the radar apparatus (2), **characterized in that** the at least one absorption element (9) terminates flush with a front side (5) of the housing (3), via which front side (5) the electromagnetic waves (4) can be emitted.

9. Method for manufacturing an absorption element (9, 100) for a radar apparatus (2) of a motor vehicle, wherein electromagnetic waves (4) are absorbed by the absorption element (9, 100), wherein the absorption element (9, 100) is manufactured by injection moulding, wherein the absorption element (9) is embodied in an arcuate shape in cross section and has two wings (12, 13) which, in the case of an absorption element (9) which is arranged outside a housing (3) of the radar apparatus (2) and on the housing (3), extend outwards from the housing (3) in opposite directions and are embodied in a curved fashion in a direction counter to an emission direction (4) of the radar apparatus (2), **characterized in that** the at least one absorption element (9) terminates flush with a front side (5) of the housing (3), via which front side (5) the electromagnetic waves (4) can be emitted.

10. Method according to Claim 9,
**characterized in that**
the absorption element (9, 100) is manufactured as a securing device for attaching the radar apparatus (2) to a vehicle component.

11. Method according to Claim 9 or 10,
**characterized by**
- making available a plastic material for the injection moulding,
- adding a wave-absorbing material to the plastic material with the result that a mixed material is made available, and
- manufacturing the absorption element (9, 100) by injection moulding from the mixed material.

12. Method according to one of Claims 9 to 11,
**characterized in that**
graphite is added, as a wave-absorbing material, to the plastic material.

## Revendications

1. Dispositif radar (1) pour un véhicule automobile, comprenant un appareil radar (2) destiné à rayonner et à recevoir des ondes électromagnétiques (4) et comprenant au moins un élément d'absorption (9, 100) qui est constitué d'un matériau absorbant qui absorbe les ondes électromagnétiques (4), l'au moins un élément d'absorption (9, 100) étant réalisé sous la forme d'un élément séparé d'un boîtier (3) de l'appareil radar (2) et étant disposé à l'extérieur du boîtier (3) et au niveau du boîtier (3), l'au moins un élément d'absorption (9), en coupe transversale, étant de configuration arquée et possédant deux ailes (12, 13) qui s'étendent depuis le boîtier (3) vers l'extérieur dans des directions opposées et qui sont de configuration cintrée dans une direction à l'opposé d'une direction de rayonnement (4) de l'appareil radar (2), **caractérisé en ce que** l'au moins un élément d'absorption (9) se termine à fleur avec un côté frontal (5) du boîtier (3) par le biais duquel peuvent être rayonnées les ondes électromagnétiques (4).

2. Dispositif radar (1) selon la revendication 1, **caractérisé en ce que** l'au moins un élément d'absorption (9, 100) est réalisé sous la forme d'un élément de maintien au moyen duquel l'appareil radar (2) peut être fixé à un élément structural de véhicule.

3. Dispositif radar (1) selon la revendication 1 ou 2, **caractérisé en ce que** l'au moins un élément d'absorption (9) est disposé autour du boîtier (3) de l'appareil radar (2) de telle sorte que l'élément d'absorption (9) entoure le boîtier (3) au niveau du pourtour extérieur.

4. Dispositif radar (1) selon l'une des revendications précédentes, **caractérisé en ce que** le boîtier (3) est inséré dans l'élément d'absorption (9).

5. Dispositif radar (1) selon la revendication 1, **caractérisé en ce que** les ailes (12, 13) font saillie au-dessus du boîtier (3) de l'appareil radar (2) dans la direction opposée à la direction de rayonnement (4).

6. Dispositif radar (1) selon l'une des revendications précédentes, **caractérisé en ce que** l'au moins un élément d'absorption (9, 100) est réalisé sous la forme d'un élément structural en fonte.

7. Dispositif radar (1) selon l'une des revendications précédentes, **caractérisé en ce que** le matériau absorbant est une matière plastique absorbant les ondes.

8. Élément de maintien (9, 100) pour un appareil radar (2) d'un véhicule automobile, l'élément de maintien étant configuré pour fixer l'appareil radar (2) à un élément structural de véhicule, l'élément de maintien (9, 100) étant constitué, au moins dans certaines zones, d'un matériau absorbant qui absorbe les ondes électromagnétiques (4), l'élément de maintien formant un élément d'absorption (9, 100) qui est réalisé sous la forme d'un élément séparé d'un boîtier (3) de l'appareil radar (2) et pouvant être disposé à l'extérieur du boîtier (3) et au niveau du boîtier (3), l'au moins un élément d'absorption (9), en coupe transversale, étant de configuration arquée et possédant deux ailes (12, 13) qui s'étendent depuis le boîtier (3) vers l'extérieur dans des directions opposées et qui sont de configuration cintrée dans une direction à l'opposé d'une direction de rayonnement (4) de l'appareil radar (2), **caractérisé en ce que** l'au moins un élément d'absorption (9) se termine à fleur avec un côté frontal (5) du boîtier (3) par le biais duquel peuvent être rayonnées les ondes électromagnétiques (4).

9. Procédé de fabrication d'un élément d'absorption (9, 100) pour un appareil radar (2) d'un véhicule automobile, des ondes électromagnétiques (4) étant absorbées par l'élément d'absorption (9, 100), l'élément d'absorption (9, 100) étant fabriqué par moulage par injection, l'élément d'absorption (9), en coupe transversale, étant de configuration arquée et possédant deux ailes (12, 13) qui, dans le cas d'un élément d'absorption (9) disposé à l'extérieur d'un boîtier (3) de l'appareil radar (2) et au niveau du boîtier (3), s'étendent depuis le boîtier (3) vers l'extérieur dans des directions opposées et qui sont de configuration cintrée dans une direction à l'opposé d'une direction de rayonnement (4) de l'appareil radar (2), **caractérisé en ce que** l'au moins un élément d'absorption (9) se termine à fleur avec un côté frontal (5) du boîtier (3) par le biais duquel peuvent être rayonnées les ondes électromagnétiques (4).

10. Procédé selon la revendication 9, **caractérisé en ce que** l'élément d'absorption (9, 100) est fabriqué en tant qu'élément de maintien destiné à fixer l'appareil radar (2) à un élément structural de véhicule.

11. Procédé selon la revendication 9 ou 10, **caractérisé par**
- fourniture d'une matière plastique pour le moulage par injection,
- mélange d'un matériau absorbant les ondes avec la matière plastique de manière à fournir un matériau mélangé, et
- fabrication de l'élément d'absorption (9, 100) par moulage par injection à partir du matériau mélangé.

12. Procédé selon l'une des revendications 9 à 11, **caractérisé en ce que** du graphite est mélangé à la matière plastique en tant que matériau absorbant les ondes.
